# EUROPEAN PATENT SPECIFICATION

(11) **EP 1 316 256 B1**
(45) Date of publication and mention of the grant of the patent: **21.09.2005**
(21) Application number: 01830742.1
(22) Date of filing: 30.11.2001
(51) Int. Cl.: A21D 13/08, A21D 13/00

(54) **Bakery food product of the snack type and method for its production**
Snack-Backwarenerzeugnis und Verfahren zur Herstellung
Produit de boulangerie du type snack et son procédé de fabrication

(43) Date of publication of application: 04.06.2003
(73) Proprietor: BARILLA G. E R. FRATELLI S.p.A., 43100 Parma (IT)
(72) Inventor: Ferrari, Corrado, c/o Barilla Alimentare S.p.A., 43100 Parma (IT); Torricelli, Roberto, c/o Barilla Alimentare S.p.A., 43100 Parma (IT)
(74) Representative: Zambardino, Umberto

(56) References cited:
- EP-A- 0 391 501
- EP-A- 0 392 495
- EP-A- 0 862 862
- GB-A- 1 541 457
- US-A- 2 450 033
- US-A- 3 704 664
- DATABASE WPI Section Ch, Week 198322 Derwent Publications Ltd., London, GB; Class D13, AN 1983-52415K XP002194290 & JP 58 067139 A (OTA T), 21 April 1983 (1983-04-21)
- PATENT ABSTRACTS OF JAPAN vol. 1995, no. 01, 28 February 1995 (1995-02-28) & JP 06 292501 A (MIMATSU:KK), 21 October 1994 (1994-10-21)
- PATENT ABSTRACTS OF JAPAN vol. 018, no. 040 (C-1155), 21 January 1994 (1994-01-21) & JP 05 268867 A (HATADA:KK), 19 October 1993 (1993-10-19)

## Description

### Field of application

The present invention generally relates to a bakery food product, generally known as a snack, comprising a base of sponge cake and a creamy filling.

More particularly, but not exclusively, the present invention relates to a snack of the aforementioned type, in which the base of sponge cake and the corresponding filling are rolled up to form a substantially cylindrical log, the cross section of which has the appearance of a concentric double spiral.

The present invention further relates to a method for the production of the aforementioned type of filled snack.

### Prior art

It is known in the field of bakery products, in particular of the so called snack foods, that snacks have for some time gained a significant technical and commercial importance, both for their organoleptic and nutritional qualities, and for their practicality in being consumed.

Amongst the wide range of available snacks products, those comprising a base of sponge cake have a consistently large niche market.

In particular, with sponge cake it is possible to prepare, besides the usual layered cakes, obtained by spreading a creamy filling between two or more layers of sponge cake, a snack in the form of a roll, obtained by spreading a filling (such as cream, jam etc.) on a sponge cake base, and then successively rolling the sponge cake base to form a cylinder.

As it is known, the sponge cake used for snacks is a sweet bakery product obtained from the cooking at a temperature of about 180°C, of a dough generally placed as a flat layer of predetermined thickness, generally of 12-15 mm. Said sponge cake is generally soft, highly porous with large cells, dry and has opposite smooth surfaces of a film like appearance assimilable to a relatively soft thin crust; said sponge cake is sufficiently elastic to withstand the reduced pressure on said opposite surfaces, whilst being easily fractured when subjected to small amounts of flexion.

Such a fracture seems to be triggered by the plurality of micro-cracks occurring in the surface crust of the sponge cake, when subjected to flexion. Furthermore, it has been observed that the tendency of the surface crust to produce micro-fractures, increases as the consistency and rigidity of the crust of a sponge cake increases; it has been further observed that the consistency and rigidity of the crust of a sponge cake increases as the thickness of the cooked dough layer decreases.

Because of this last characteristic (ease of fracture under flexion), the thickness of the layers of sponge cake cannot be less than a certain amount, and as the thickness of the entire snack must not in turn be too thick to be functional and easily manipulated etc, any amount of filling associated with the sponge cake is therefore reduced, to the detriment of the organoleptic characteristics of the snack.

This drawback is further increased when it is wished to provide the snack (comprising sponge cake and filling) with form of a cylindrical log, by rolling the baked base and the associated filling.

In fact, to prevent fracture of the base of sponge cake whilst being rolled, it is necessary that on one hand the rolling be performed with an appropriate radius of curvature and, on the other hand, said base have the least rigid surface crust as possible, and therefore a consistent thickness, increased with respect to that usable for a flat snack. This is a major drawback with respect to the quantity of filling which can be associated with the rolled up base and therefore in the overall organoleptic characteristics of the snack.

Documents EP-A-0392495, EP-A-0862862, EP-A-0391501 and JP(A)58067139 describe thin sponge cake type oven products having a thickness of 0.5 to 8 mm.
EP-A-0392495 discloses a process for making a grilled sponge product, 4 to 8 mm thick, baked in a conventional oven at 170-190°C (Example 1) for 7 to 12 minutes;
EP-A-0862862 discloses a method and apparatus for decorating confectionery. According to Embodiments 1 and 2, application of sponge dough on the apparatus results in conventionally baked sponge cakes that are 3 to 5 mm thick and that have been baked at 170°C for 5 to 10 minutes;
EP-A-0391501 describes an apparatus for producing baked products. Example 1 describes a sponge cake of unspecified thickness undergoing a baking process at 170°C;
JP(A)58067139 describes a storage stable chocolate sandwich cake, comprising conventionally baked sponge layers holding a chocolate layer and having a thickness of 0.5 to 2 mm.

The products described in the above documents are obtained by conventional baking methods, which presumably lead to the formation of a superficial soft crust.

The problem that forms the basis of the present invention is to provide a bakery product of the so called snack type, comprising a base of sponge cake and a filling, having structural characteristics that entirely overcome the aforementioned drawbacks with reference to the prior art.

### Summary of the invention

Such a problem is solved, according to the invention, by a bakery product of the considered type, ie. a filled snack comprising a base layer of sponge cake and a layer of filling, juxtaposed and rolled up to form a substantially cylindrical log, having a cross section with the appearance of a concentric flat double spiral, characterised in that said base layer of sponge cake is free of surface crust, and has a thickness not greater than 5mm.

Said base layer of sponge cake is furthermore characterised by having a porous structure with uniformly distributed cells, and preferably with a thickness of 1-3 mm. Moreover, the base layer of sponge cake has a moisture content of 20-28 %, and a Aw (Water Activity) of 0.73-0.83.

Preferably, the weight ratio between the base layer of sponge cake and that of the layer of filling in filled snacks according to the invention is in the range of 60/40 to 50/50.

The filled snacks according to the invention are obtained by a method comprising the steps of:
- providing a dough for sponge cake of a cast type,
- continuously laying down said dough on a conveyor belt of an oven to form a thin layer with a uniform thickness of 1-5 mm,
- subjecting said thin layer to baking in a baking chamber of said oven saturated with steam at a temperature of 120-200°C, obtaining a baked base of sponge cake having a thickness not greater than 5mm,
- continuously detaching said baked base of sponge cake from the conveyor belt,
- continuously laying down a thin layer of a filling cream having a uniform thickness of 0.5-1.5 mm on said baked base of sponge cake, obtaining a baked and filled base of sponge cake,
- rolling up and successively portioning said baked and filled base of sponge cake, obtaining said filled snack.

The preparation of the dough for sponge cake of the cast type is carried out with conventional procedures and equipment. For example, the ingredients making up the dough are mixed in a planetary mixer fitted with a large-wired whisk and a scraper.

The half-finished dough thus obtained is then aerated with conventional methods with appropriate equipment to obtain a dough of the cast type. The operational conditions of the aeration are chosen to intensively and mechanically work the half-finished dough and at the same time avoid an appreciable increase in temperature which would negatively affect the finally obtained emulsion.

Preferably, the dough for sponge cake of the cast type used for the production of filled snacks according to the invention is substantially free of egg yolk and has a content of egg white in the range of 1 - 6.5 % by weight.

The presence of egg yolk in the dough of the cast type could in fact give an excessive coloration and overly strong flavour to the baked base of the sponge cake and therefore also to the filled snack according to the invention.

The placement of the dough for sponge cake of the cast type on the conveyor belt is carried out with a conventional method by means of a station of dough distribution equipped with one or more distributors.

Preferably, the aforementioned distribution station comprises a distributor in contact relationship with the conveyor belt and consisting of a hopper with a case that is open on one side and below and is equipped with a vertically situated sliding shutter placed in correspondance with the open side at a predetermined distance from the conveyor belt.

The distributor described above provides a uniform distribution of dough for sponge cake of the cast type in the form of a continuous layer of constant thickness, the thickness being substantially equal to the distance between the lower end of the sliding shutter and the surface of the conveyor belt. The dough comes out of the distributor substantially due to friction with the conveyor belt.

The conveyor belt is generally metal and is preferably pre-heated to a controlled temperature of 20-50°C to avoid any destabilisation of the aforementioned emulsion.

Preferably, dough for sponge cake of the cast type placed on the conveyor belt has a moisture content of 27-34%.

Optionally, if desired, the thin layer of dough for sponge cake of the cast type can be decorated on the surface by applying thereupon, before baking, a second dough of a contrasting colour to that of the dough of the cast type. This is carried out with the aim of having a filled snack according to the invention, which has a well defined pattern on one of its exposed surfaces.

To obtain such a filled snack, the method according to the invention further comprises the steps of:
- continuously laying down a second dough on said thin layer of dough for sponge cake of the cast type before its baking, the second dough having a contrasting colour to that of the dough of the cast type and forming a well defined pattern on its surface,
- turning over said base of baked sponge cake after being removed from the conveyor belt.

The turning over exposes, on applying the filling cream, the opposite surface to the one having a well defined pattern, which is then visible in the final filled snack after being rolled up.

The laying down of the second dough onto the thin layer of dough for sponge cake of the cast type is carried out with a conventional method, for example by means of a distribution station of said second dough equipped with a distributor with a continuos falling distribution system.

Preferably, the thin layer of the aforementioned second dough has a uniform thickness of 1-2 mm and a moisture content of 28-34 %.

The baking of the dough for sponge cake of the cast type possibly decorated on the surface with the aforementioned second dough is carried out in a baking chamber of an electric oven, which is passed through by the metal conveyor belt on which the dough of the cast type and optionally the aforementioned second dough is laid down.

According to the present invention, the above aforementioned baking chamber is saturated with a superheated steam, which passes therein at a flow rate of 0.5-50 m³/h and the dough of the cast type is baked at a temperature of 120-200°C, preferably 140-180°C for a much reduced time in the order of 1-2 minutes.

It has been surprisingly found that the baked base of sponge cake obtained under the baking conditions foreseen in the method according to the present invention is characterised by a substantial absence of crust despite of having a reduced thickness, not greater than 5 mm.

In the baking conditions foreseen in the method according to the present invention the known Maillard reaction between the reducing sugars and the amino groups of proteins and the peptides, which bring about the browning of the crust is substantially reduced. In practice, the huge amount of steam introduced into the baking chamber allows vapour to be in constant contact with the dough of the cast type establishing a kind of steam baking which substantially prevents the formation of crust in the final product.

The substantial absence of crust drastically improves the structural characteristics of the baked base of sponge cake, particularly regarding its elasticity, which greatly facilitates the operations of mechanical manipulation, such as for example rolling up.

Furthermore, the aforementioned baked base of sponge cake has a clear and uniform coloration, a homogenous structure characterised by the presence of uniformly distributed pores or cells and even improved organoleptic characteristics compared to traditional sponge cake.

This positively reflects onto the organoleptic characteristics of the final filled snacks obtained with the method according to the invention, which result in being improved. In particular the sensation perceived on the palate while being tasted is one of being easily swallowed accompanied by a pleasing sensation of moisture and melting.

In the method according to the invention, the removal of the baked base of sponge cake from the conveyor belt is carried out by means of conventional equipment, preferably by means of a scraper or vibrating knife equipped with a blade constantly maintained in contact under pressure with the conveyor belt.

In the method according to the invention, the operations of mechanical manipulations of the baked base of sponge cake, that is to say the aforementioned steps of being rolled up and eventually of being turned over, are greatly facilitated due to the improved elastic characteristics resulting from a substantial absence of crust in the base of the sponge cake.

In fact, according to the present invention, such operations can be carried out without any substantial occurring of cracking or breakage in the baked base of sponge cake.

Preferably, the baked base of sponge cake which has just been detached from the conveyor belt of the baking oven is continuously laid down a second conveyor belt on which are performed the aforementioned steps of being turned over, if necessary, the laying down of the filling cream, being rolled up and being portioned of the base to form a filled snack according to the invention.

The laying down of the thin uniform layer of the filling cream on the base for the snack is carried out with a conventional method, using a distribution station of the cream preferably of the same type as the distribution station of the dough for sponge cake of the cast type.

The rolling up of the baked and filled base of sponge cake is carried out with a conventional method for example by means of a device comprising shovels to turn over the baked and filled base of sponge cake in co-operation with a rolling up device.

The portioning of the baked and filled base of sponge cake after being rolled up to form the filled snacks according to the invention is carried out with a conventional method, for example by means of a cutting device or ultrasonic cutter.

The method according to the invention advantageously allows for the creation of filled snacks with an increased number of spirals per unit of surface after the rolling up of the baked base of sponge cake and with an increased content of filling, up to a substantial weight balance between the base and the filling itself.

In particular, the weight ratio base to filling in the filled snacks obtained with the method of the invention is within the range of 60/40 and 50/50. These filled snacks are characterised by the sensation of continuity in flavour base/filling which is felt on the palate during the tasting due to a substantial balance in weight of the base and the filling.

Such continuity of flavour is not obtainable in filled snacks obtained by filling and rolling up an analogous traditional sponge cake due to their worse structural characteristics, which, as previously underlined do not allow for an association of sponge cake with an adequate quantity of filling. Consequently these snacks present an undesired organoleptic dichotomy perceivable on the palate of the consumer.

The characteristics and advantages of the invention will become greatly clearer from the following description of an example of production of filled snacks according to the invention, provided for indicative and not limiting purposes.

### Example

With a conventional kneading procedure, a dough for sponge cake of the cast type is prepared with ingredients noted in the following Table 1 together with their percentage in weight.

**TABLE 1**

| Ingredients | % in weight |
|---|---|
| Sugar | 28 |
| Egg white powder | 3 |
| Salt | 0.2 |
| Water | 19 |
| Glucose syrup | 18 |
| Monogliceride raising gel | 3 |
| Flavours | 0.1 |
| Palm margarine | 2 |
| Anhydrous butter | 2 |
| Flour | 20 |
| Potato starch | 4 |
| Sodium bicarbonate | 0.3 |
| Sodium pyrophosphate | 0.4 |
| Total | 100 |

The ingredients were mixed in a planetary mixer equipped with a whisk and scraper, in which mixer they were introduced in two steps, in the order listed in table 1.

In the first step the ingredients from the sugar pre-mixed with the egg white up to the anhydrous butter were introduced in sequence in the above-mentioned mixer and mixed for 5 minutes at a rotation speed of the whisk of 50 revolutions/minutes. In particular, the palm margarine and the anhydrous butter were introduced into the mixer at a temperature of 28-35°C.

In the second step, the remaining ingredients quoted in Table 1 were added in sequence into the mixer and mixed with the ingredients of the first step for 2 minutes at a whisk rotation speed of 50 revolutions/ minutes.

A half-finished dough was thus obtained which had an exit temperature from the mixer of 24°C and a specific weight of 0.65-0.85 g/ml.

The half-finished dough was whisked in an operating turboemulsifier at a rotation speed of 400 revolutions/minutes and at a substantially constant temperature of 24°C, obtaining a dough for a sponge cake of a cast type which had a specific weight of 0.40-0.60 g/ml.

The above-mentioned sponge cake of a cast type was loaded on a dispenser and laid down, at a capacity of 500g/minute on a conveyor belt of a baking oven in form of a uniform continuos layer and of a constant thickness.

The conveyor belt was preheated at a temperature of 40°C and the above-mentioned layer had a thickness of 2 mm, a width of 300 mm and a content of humidity of 28-33%.

The continuos layer of dough was then baked on the conveyor belt in the baking room of the aforementioned oven, which baking room had been saturated by vapor introduced at a flow rate of 30 m³ /h.

The dough was baked at a temperature of 150°C in an amount of time of 2 minutes obtaining, at the exit of the oven, a base of sponge cake which had a thickness of 3 mm.

The base of the sponge cake was then detached from the conveyor belt by means of a vibrant knife. It presented a humidity content of 25-26%, a Aw (Water Activity) of 0.78-0.80 and porous structure with uniformly distributed pores or cells.

The so-obtained base of sponge cake was furthermore characterised by a light yellow colour, by a sustantial absence of crust and presented such exceptional elastic properties to be easily rolled without breaking or creating crackings in the structure.

The aforementioned base of sponge cake was used for the production of a plurality of filled snacks according to the invention under the shape of a substantially cylindrical log having, in cross section, the appearence of a concentric double spiral.

In such production, the aforementioned base of sponge cake, after the detachment from the conveyor belt, was continuously laid down on a second conveyor belt arranged in series, where it reached a filling station including a distributor supplied with a filling cream.

The ingredients of the aforementioned filling cream are listed in the following Table 2 together with their percentage in weight.

**TABLE 2**

| Ingredients | % in weight |
|---|---|
| Vegetable fat | 20 |
| Hazelnut paste | 5 |
| Water | 20 |
| Glucose syrup | 25 |
| Refined sugar | 20 |
| Cocoa | 2 |
| Chocolate | 7 |
| Emulsifiers | 0.5 |
| Flavours | 0.5 |
| Total | 100 |

The filling cream was poured on the base of the sponge cake with conventional devices thereby forming a thin and uniform layer of cream which had a thickness of 1 mm. The weight ratio base to filling cream was 50/50.

At this point, the base of the so-filled sponge cake continued its way on the conveyor belt until it reached a station of rolling up including a roller operating at a speed of 40 revolutions/minute.

In this station of rollig up, the base for filled snacks was rolled up on itself four times forming a substantially cylindrical log having, in cross section, the appearence of a concentric double spiral.

The cylindrical log was then portioned by means of a ultrasound cutter in a moltiplicity of filled snacks.

The so-obtained filled snacks show excellent organoleptic characteristics and an easy swallowing accompanied by a pleasing sensation of moisture and melting. Furthermore they distinguish themselves for the feeling of continuity of flavours between base and filling which is perceivable on the palate during the tasting.

## Claims

1. A filled snack comprising a base layer of sponge cake and a filling layer, juxtaposed and rolled up thus to form a substantially cylindric log, having a cross section with the appearance of a concentric flat double spiral, **characterised in that** said base layer of sponge cake is free of surface crust, and has a thickness not greater than 5 mm.

2. A filled snack according to claim 1, wherein said base layer of sponge cake has a thickness of 1-3 mm.

3. A filled snack according to claim 1 or claim 2, wherein said base layer of sponge cake has a porous structure with uniformly distributed cells, a moisture content of 20-28%, and a Aw of 0.73-0.83.

4. A filled snack according to anyone of the previous claims, wherein the weight ratio between said base layer of sponge cake and said filling layer is comprised between 60/40 and 50/50.

5. A filled snack according to anyone of the previous claims, **characterised in that** it further comprises a decoration forming a predetermined pattern onto one of its visible surfaces.

6. A method for the production of filled snacks according to any one of claims 1 to 4, said method comprising the steps of:
- providing a dough for sponge cake of a cast type,
- continuously laying down said dough on a conveyor belt of an oven to form a thin layer with a uniform thickness of 1-5 mm,
- subjecting said thin layer to baking in a baking chamber of said oven saturated with steam at a temperature of 120-200°C, obtaining a baked base of sponge cake having a thickness not greater than 5 mm,
- continuously detaching said baked base of sponge cake from the conveyor belt,
- continuously laying down a thin layer of a filling cream having a uniform thickness of 0.5-1.5 mm on said baked base of sponge cake, obtaining a baked and filled base of sponge cake,
- rolling up and successively portioning said baked and filled base of sponge cake, obtaining said filled snacks.

7. A method for the production of filled snacks according to claim 6, the method comprising the steps of:
- providing a dough for sponge cake of a cast type,
- continuously laying down said dough on a conveyor belt of an oven to form a thin layer with a uniform thickness of 1-5 mm,
- continuously laying down a second dough on said thin layer of dough for sponge cake of the cast type so as to form a well defined pattern on its surface, the second dough having a contrasting colour to that of the dough of the cast type,
- subjecting said thin layer of dough for sponge cake having said well defined pattern on its surface to baking in a baking chamber of said oven saturated with steam at a temperature of 120-200°C, obtaining a baked base of sponge cake having a thickness not greater than 5 mm,
- continuously detaching and turning over said baked base of sponge cake from the conveyor belt,
- continuously laying down a thin layer of a filling cream having a uniform thickness of 0.5-1.5 mm on said baked base of sponge cake, obtaining a baked and filled base of sponge cake,
- rolling up and successively portioning said baked and filled base of sponge cake, obtaining said filled snacks.

8. A method according to claim 6 or 7, wherein the steam is introduced into the baking chamber at a flow rate of 0.5-50 m³/h.

9. A method according to any one of claims 6 to 8, wherein said baking is carried out at a temperature of 140-180 °C.

10. A method according to any one of claims 6 to 9, wherein said dough for sponge cake of a cast type has a moisture content of 27-34 %.

11. A method according to any one of claims 6 to 10, wherein said dough for sponge cake of a cast type is substantially free of egg-yolk and has a content of egg white comprised in the range 1-6,5 % by weight.

12. A method according to any one of claims 6 to 11, wherein the placement of the dough for sponge cake of a cast type on the conveyor belt is carried out by means of a dispenser of dough maintained in contact relationship with the conveyor belt, which dispenser consisting of a hopper with a case that is open on one side and below and is equipped with a vertically situated sliding shutter placed in correspondance with the open side at a predetermined distance from the conveyor belt.

13. A method according to any one of claims 6 to 12, wherein said baked base of sponge cake has a thickness of 1-3 mm.

14. A method according to any one of claims 6 to 13, wherein said baked base of sponge cake is detached from the conveyor belt by means of a scraper or vibrant knife equipped with a blade which is constantly kept in pressure contact with the conveyor belt.

15. A method according to any one of claims 6 to 14, wherein the laying down of said thin layer of filling cream onto said baked base of sponge cake is carried out so as to have a weight ratio of the baked base of sponge cake to the filling cream comprised between 60/40 and 50/50.

16. A method according to any one of the claims 6 to 15, wherein the portioning of said baked and filled base of sponge cake is carried out through an ultrasonic cutter.

17. A sweet bakery food product, of the sponge cake type, for the production of filled snacks according to any one of claims 1 to 5, **characterised in that** it has a thickness not greater than 5 mm and is free of surface crust.

18. A method for the production of a sweet bakery food product, of the sponge cake type, according to claim 17, said method comprising the steps of:
- providing a dough for sponge cake of a cast type,
- continuously laying down said dough on a conveyor belt of an oven saturated with steam to form a thin layer having a uniform thickness of 1-5 mm,
- optionally laying down continuously a second dough on said thin layer of dough for sponge cake of the cast type so as to form a well defined pattern on its surface, the second dough having a contrasting colour to that of the dough for sponge cake of the cast type,
- subjecting said thin layer of dough for sponge cake optionally having said well defined pattern on its surface to baking in a baking chamber of said oven saturated with steam at a temperature of 120-200°C, obtaining said sweet bakery food product,
- continuously detaching said sweet bakery food product from the conveyor belt.

19. Use of the sweet bakery food product of the sponge cake type according to claim 17 as base layer for the production of filled snacks according to any one of claims 1 to 5.

## Patentansprüche

1. Gefüllter Snack mit einer Grundschicht aus Biskuit und einer Füllschicht, die übereinander gelegt und zusammengerollt werden, um einen im Wesentlichen zylindrischen Block mit einem Querschnitt zu bilden, der das Aussehen einer konzentrischen, flachen Doppelspirale hat, **dadurch gekennzeichnet, dass** die Grundschicht aus Biskuit an der Oberfläche keine Kruste hat und eine Dicke von nicht größer als 5 mm hat.

2. Gefüllter Snack nach Anspruch 1, wobei die Grundschicht aus Biskuit eine Dicke von 1 - 3 mm hat.

3. Gefüllter Snack nach Anspruch 1 oder 2, wobei die Grundschicht aus Biskuit eine poröse Struktur mit gleichförmig verteilten Zellen, einen Feuchtigkeitsgehalt von 20 bis 28 % und eine Wasseraktivität A_{w} von 0,73 bis 0,83 aufweist.

4. Gefüllter Snack nach einem der vorhergehenden Ansprüche, wobei das Gewichtsverhältnis von Grundschicht aus Biskuit zu Füllschicht zwischen 60/40 und 50/50 liegt.

5. Gefüllter Snack nach einem der vorhergehenden Ansprüche, **dadurch gekennzeichnet, dass** er darüber hinaus eine Dekoration umfasst, die ein vorbestimmtes Muster auf einer seiner sichtbaren Oberflächen bildet.

6. Verfahren zur Herstellung von gefüllten Snacks nach einem der Ansprüche 1 bis 4, wobei das Verfahren folgende Schritte umfasst:
- Zubereiten eines gießfähigen Biskuitteigs,
- kontinuierliches Auftragen des Teigs auf ein Förderband eines Ofens zur Bildung einer dünnen Schicht mit einer gleichmäßigen Dicke von 1 bis 5 mm,
- Unterziehen der dünnen Schicht einem Backvorgang in einer Backkammer des Ofens, die mit Dampf bei einer Temperatur von 120 bis 200°C gesättigt ist, womit eine gebackene Unterlage aus Biskuit mit einer Dicke von nicht größer als 5 mm erhalten wird,
- kontinuierliches Abnehmen der gebackenen Unterlage aus Biskuit vom Förderband,
- kontinuierliches Auftragen einer dünnen Schicht einer Füllungscreme mit einer gleichmäßigen Dicke von 0,5 bis 1,5 mm auf die gebackene Unterlage aus Biskuit, wobei eine gebackene und gefüllte Unterlage aus Biskuit erhalten wird,
- Zusammenrollen und aufeinander folgendes Portionieren der gebackenen und mit Füllung versehenen Unterlage aus Biskuit, womit die gefüllten Snacks erhalten werden.

7. Verfahren zur Herstellung von gefüllten Snacks nach Anspruch 6, wobei das Verfahren folgende Schritte umfasst:
- Zubereiten eines gießfähigen Biskuitteigs,
- kontinuierliches Auftragen des Teigs auf ein Förderband eines Ofens zur Bildung einer dünnen Schicht mit einer gleichmäßigen Dicke von 1 bis 5 mm,
- kontinuierliches Auftragen eines zweiten Teigs auf die dünne, gießfähige Schicht aus Biskuitteig, um auf ihrer Oberfläche ein genau definiertes Muster zu bilden, wobei der zweite Teig eine zum gießfähigen Teig kontrastgebende Farbe hat,
- Unterziehen der dünnen Schicht aus Biskuitteig mit dem auf ihr befindlichen, genau definierten Muster einem Backvorgang in einer Backkammer des Ofens, die mit Dampf bei einer Temperatur von 120 bis 200°C gesättigt ist, wobei eine gebackene Unterlage aus Biskuit mit einer Dicke von nicht größer als 5 mm erhalten wird,
- kontinuierliches Abnehmen der gebackenen Unterlage aus Biskuit vom Förderband und Wenden derselben,
- kontinuierliches Auftragen einer dünnen Schicht einer Füllungscreme mit einer gleichmäßigen Dicke von 0,5 bis 1,5 mm auf die gebackene Unterlage aus Biskuit, wobei eine gebackene und mit Füllung versehene Unterlage aus Biskuit erhalten wird,
- Zusammenrollen und aufeinander folgendes Portionieren der gebackenen und mit Füllung versehenen Unterlage aus Biskuit, womit die gefüllten Snacks erhalten werden.

8. Verfahren nach Anspruch 6 oder 7, wobei der Dampf in die Backkammer mit einem Durchsatz von 0,5 bis 50 m³/h eingeleitet wird.

9. Verfahren nach einem der Ansprüche 6 bis 8, wobei das Backen bei einer Temperatur von 140 bis 180°C erfolgt.

10. Verfahren nach einem der Ansprüche 6 bis 9, wobei der gießfähige Biskuitteig einen Feuchtigkeitsgehalt von 27 bis 34 % hat.

11. Verfahren nach einem der Ansprüche 6 bis 10, wobei der gießfähige Biskuitteig im Wesentlichen frei von Eigelb ist und einen Gehalt an Eiweiß zwischen 1 und 6,5 Gew.-% hat.

12. Verfahren nach einem der Ansprüche 6 bis 11, wobei das Aufbringen des gießfähigen Biskuitteigs auf das Förderband mittels einer Teigabgabeeinrichtung ausgeführt wird, die in Kontakt mit dem Förderband gehalten wird und aus einem Fülltrichter mit einem Gehäuse besteht, das an einem Ende und weiter unten offen sowie mit einem vertikal angeordneten Gleitverschluss ausgestattet ist, der in Entsprechung mit der offenen Seite in einem vorbestimmten Abstand vom Förderband angeordnet ist.

13. Verfahren nach einem der Ansprüche 6 bis 12, wobei die gebackene Unterlage aus Biskuit eine Dicke von 1 bis 3 mm hat.

14. Verfahren nach einem der Ansprüche 6 bis 13, wobei die gebackene Unterlage aus Biskuit vom Förderband mittels eines Schabers oder eines vibrierenden, mit Klinge versehenen Messers abgenommen wird, der bzw. die ständig in Druckkontakt mit dem Förderband gehalten wird.

15. Verfahren nach einem der Ansprüche 6 bis 14, wobei das Auftragen der dünnen Schicht aus Füllungscreme auf die gebackene Unterlage aus Biskuit so ausgeführt wird, dass ein Gewichtsverhältnis von gebackener Unterlage aus Biskuit zu Füllungscreme besteht, das zwischen 60/40 und 50/50 liegt.

16. Verfahren nach einem der Ansprüche 6 bis 15, wobei das Portionieren der gebackenen und gefüllten Unterlage aus Biskuit mit einer Ultraschall-Schneideinrichtung ausgeführt wird.

17. Süßes Backwarenerzeugnis in Biskuitart, zur Herstellung von gefüllten Snacks nach einem der Ansprüche 1 bis 5, **dadurch gekennzeichnet, dass** es eine Dicke nicht größer als 5 mm hat und an der Oberfläche keine Kruste aufweist.

18. Verfahren zur Herstellung eines süßen Backwarenerzeugnisses in Biskuitart, nach Anspruch 17, wobei das Verfahren folgende Schritte umfasst:
- Zubereiten eines gießfähigen Biskuitteigs,
- kontinuierliches Auftragen des Teigs auf ein Förderband eines mit Dampf gesättigten Ofens zur Bildung einer dünnen Schicht mit einer gleichmäßigen Dicke von 1 bis 5 mm,
- gegebenenfalls kontinuierliches Auftragen eines zweiten Teigs auf die dünne, gießfähige Schicht aus Biskuitteig, um auf ihrer Oberfläche ein genau definiertes Muster zu bilden, wobei der zweite Teig eine zum gießfähigen Biskuitteig Kontrast gebende Farbe hat,
- Unterziehen der dünnen Schicht aus Biskuitteig mit dem auf ihr optional befindlichen, genau definierten Muster einem Backvorgang in einer Backkammer des Ofens, die mit Dampf bei einer Temperatur von 120 bis 200°C gesättigt ist, wobei
das süße Backwarenerzeugnis erhalten wird,
- kontinuierliches Abnehmen des süßen Backwarenerzeugnisses vom Förderband.

19. Verwendung des süßen Backwarenerzeugnisses in Biskuitart nach Anspruch 17 als Grundschicht zur Herstellung von gefüllten Snacks nach einem der Ansprüche 1 bis 5.

## Revendications

1. Collation fourrée comprenant une couche de base de génoise et une couche de fourrage, juxtaposées et enroulées ainsi pour former une bûche sensiblement cylindrique, comportant une coupe transversale ayant l'apparence d'une spirale double plate concentrique, **caractérisée en ce que** ladite couche de base de génoise est dépourvue de croûte de surface, et a une épaisseur n'étant pas supérieure à 5 mm.

2. Collation fourrée selon la revendication 1, dans laquelle ladite couche de base de génoise a une épaisseur de 1 à 3 mm.

3. Collation fourrée selon la revendication 1 ou la revendication 2, dans laquelle ladite couche de base de génoise a une structure poreuse avec des cellules réparties de façon uniforme, une teneur en humidité de 20 à 28 %, et une Aw de 0,73 à 0,83.

4. Collation fourrée selon l'une quelconque des revendications précédentes, dans laquelle le rapport pondéral entre ladite couche de base de génoise et ladite couche de fourrage est compris entre 60/40 et 50/50.

5. Collation fourrée selon l'une quelconque des revendications précédentes, **caractérisée en ce qu'**elle comprend en outre une décoration formant un motif prédéterminé sur l'une de ses surfaces visibles.

6. Procédé pour la production de collations fourrées selon l'une quelconque des revendications 1 à 4, ledit procédé comprenant les étapes consistant à :
- produire une pâte pour une génoise d'un type moulé,
- déposer de façon continue ladite pâte sur un tapis roulant d'un four pour former une couche mince avec une épaisseur uniforme de 1 à 5 mm,
- soumettre ladite couche mince à une cuisson dans une chambre de cuisson dudit four saturé de vapeur à une température de 120 à 200 °C, obtenant une base cuite de génoise ayant une épaisseur n'étant pas supérieure à 5 mm,
- détacher de façon continue ladite base cuite de génoise du tapis roulant,
- déposer de façon continue une mince couche d'une crème de fourrage ayant une épaisseur uniforme de 0,5 à 1,5 mm sur ladite base cuite de génoise, obtenant une base de génoise cuite et fourrée,
- enrouler et faire successivement des portions de ladite base de génoise cuite et fourrée, obtenant lesdites collations fourrées.

7. Procédé pour la production de collations fourrées selon la revendication 6, le procédé comprenant les étapes consistant à :
- produire une pâte pour génoise d'un type moulé,
- déposer de façon continue ladite pâte sur un tapis roulant d'un four pour former une couche mince avec une épaisseur uniforme de 1 à 5 mm,
- déposer de façon continue une seconde pâte sur ladite couche mince de pâte pour génoise du type moulé de façon à former un motif bien défini sur sa surface, la seconde pâte ayant une couleur contrastée par rapport à celle de la pâte du type moulé,
- soumettre ladite couche mince de pâte pour génoise comportant un motif bien défini sur sa surface à une cuisson dans une chambre de cuisson dudit four saturé de vapeur à une température de 120 à 200 °C, obtenant une base cuite de génoise ayant une épaisseur n'étant pas supérieure à 5 mm,
- détacher de façon continue et retourner ladite base cuite de génoise du tapis roulant,
- déposer de façon continue une mince couche d'une crème de fourrage ayant une épaisseur uniforme de 0,5 à 1,5 mm sur ladite base cuite de génoise, obtenant une base de génoise cuite et fourrée,
- enrouler et faire des portions de façon successive de ladite base de génoise cuite et fourrée, obtenant lesdites collations fourrées.

8. Procédé selon la revendication 6 ou 7, dans lequel la vapeur est introduite dans la chambre de cuisson à un débit de 0,5 à 50 m³/h.

9. Procédé selon l'une quelconque des revendications 6 à 8, dans lequel ladite cuisson est réalisée à une température de 140 à 180 °C.

10. Procédé selon l'une quelconque des revendications 6 à 9, dans lequel ladite pâte pour génoise d'un type moulé a une teneur en humidité de 27 à 34 %.

11. Procédé selon l'une quelconque des revendications 6 à 10, dans lequel ladite pâte pour génoise d'un type moulé est sensiblement dépourvue de jaune d'oeuf et a une teneur en blanc d'oeuf comprise dans la plage de 1 à 6,5 % en poids.

12. Procédé selon l'une quelconque des revendications 6 à 11, dans lequel le placement de la pâte pour génoise d'un type moulé sur le tapis roulant est réalisé au moyen d'un distributeur de pâte maintenu en relation de contact avec le tapis roulant, lequel distributeur comprenant une trémie avec un casier qui est ouvert sur un côté et en dessous et est équipé d'un volet coulissant situé verticalement placé en correspondance avec le côté ouvert à une distance prédéterminée du tapis roulant.

13. Procédé selon l'une quelconque des revendications 6 à 12, dans lequel ladite base cuite de génoise a une épaisseur de 1 à 3 mm.

14. Procédé selon l'une quelconque des revendications 6 à 13, dans lequel ladite base cuite de génoise est détachée du tapis roulant au moyen d'un grattoir ou d'un couteau vibrant équipé d'une lame qui est constamment maintenue en contact à pression avec le tapis roulant.

15. Procédé selon l'une quelconque des revendications 6 à 14, dans lequel le dépôt de la couche mince de crème de fourrage sur ladite base cuite de génoise est réalisé de façon à avoir un rapport pondéral de la base cuite de génoise à la crème de fourrage compris entre 60/40 et 50/50.

16. Procédé selon l'une quelconque des revendications 6 à 15, dans lequel la réalisation de portions de ladite base cuite et fourrée de génoise est effectuée au moyen d'un coupeur à ultrasons.

17. Produit alimentaire de boulangerie sucré, du type de la génoise, pour la production de collations fourrées selon l'une quelconque des revendications 1 à 5, **caractérisé en ce qu'**il a une épaisseur n'étant pas supérieure à 5 mm et est dépourvu de croûte de surface.

18. Procédé pour la production d'un produit alimentaire de boulangerie sucré, du type de la génoise, selon la revendication 17, ledit procédé comprenant les étapes consistant à :
- produire une pâte pour une génoise d'un type moulé,
- déposer de façon continue ladite pâte sur un tapis roulant d'un four saturé avec de la vapeur pour former une couche mince ayant une épaisseur uniforme de 1 à 5 mm,
- facultativement déposer de façon continue une seconde pâte sur ladite mince couche de pâte pour génoise du type moulé de façon à former un motif bien défini sur sa surface, la seconde pâte ayant une couleur contrastée par rapport à celle de la pâte pour génoise du type moulé,
- soumettre ladite couche mince de pâte pour génoise comportant facultativement ledit motif bien défini sur sa surface à une cuisson dans une chambre de cuisson dudit four saturé de vapeur à une température de 120 à 200 °C, obtenant ledit produit alimentaire de boulangerie sucré,
- détacher de façon continue ledit produit alimentaire de boulangerie sucré du tapis roulant.

19. Utilisation du produit alimentaire de boulangerie sucré du type de la génoise selon la revendication 17 comme couche de base pour la production de collations fourrées selon l'une quelconque des revendications 1 à 5.
